# EUROPEAN PATENT APPLICATION

(11) **EP 4 299 552 A1**
(43) Date of publication of application: **03.01.2024**
(21) Application number: 22182600.1
(22) Date of filing: 01.07.2022
(51) Int. Cl.: C05B 1/06, C05B 7/00, C05B 11/10, C05D 1/00, C05F 11/00, C05G 3/40, C05G 5/35, C05G 5/30, C05B 15/00, C05B 17/00, C05G 5/40

(54) **METHOD FOR PRODUCTION OF CELLULOSE-COATED KNP COMPLEX NUTRIENT**

(71) Applicant: SABIC Global Technologies B.V., 4612 PX Bergen op Zoom (NL)
(72) Inventor: MAMEDOV, Aghaddin, Sugar Land, TX 77478 (US); AL-RABHI, Mohamed, Sugar Land, TX 77478 (US)
(74) Representative: J A Kemp LLP

(57) **Abstract**

A fertilizer composition comprising nitrogen, phosphorus, and potassium nutrients, and methods for producing and using the same are disclosed. The fertilizer composition may include ammonium cellulose phosphate with potassium ammonium phosphate encapsulated within the ammonium cellulose phosphate. The ammonium cellulose phosphate fertilizer may also include potassium ammonium phosphate absorbed on the surface of ammonium cellulose phosphate.

## Description

### BACKGROUND OF THE INVENTION

### A. Field of the Invention

This invention is in the field of dual release fertilizers. Generally, it concerns an ammonium cellulose phosphate fertilizer composition that includes ammonium cellulose phosphate and potassium ammonium phosphate encapsulated within the ammonium cellulose phosphate and in some instances absorbed on the surface of the ammonium cellulose phosphate. Methods of production and use are also disclosed.

### B. Description of Related Art

Fertilizers are chemical compositions that are added to plants and crops in order to provide nutrients that promote growth. Nitrogen, phosphorus, and potassium, or NPK, are present in many fertilizers, and these three primary nutrients play key roles in plant nutrition and growth. Nitrogen is considered to be the most important nutrient, and plants absorb more nitrogen than any other element. Nitrogen is essential for the formation of proteins, and proteins make up a significant portion of most living tissues. The second primary nutrient, phosphorus, is linked to a plant's ability to use and store energy, including the process of photosynthesis. Potassium is the third primary nutrient of commercial fertilizers. It helps strengthen resistance to disease and plays an important role in increasing crop yields and overall quality. Potassium also protects the plant when the weather is cold or dry, strengthening its root system and preventing wilt.

Fertilizers offer different release profiles in which the rate at which nitrogen, phosphorus, and potassium nutrients are released is variable. Most commercial fertilizers are water-soluble quick-release fertilizers (QRFs) that quickly release nutrients when placed in soil. These quick-release fertilizers are impractical if unpredictable, high-leaching events like flooding occur. Controlled-release fertilizers (CRFs) are fertilizers that contain a plant nutrient in a form the plant cannot immediately absorb. Controlled-release fertilizers are typically coated or encapsulated with materials that control the rate, pattern, and duration of plant nutrient release. Oftentimes, the encapsulating materials are not biodegradable and accumulate in soils and plants over time.

In many cases, fertilizers that provide a combination of quick and extended nutrient release are desirable. A number of fertilizer production techniques have been developed that include polymeric components in attempts to slow the release of fertilizer nutrients. Mulyani et al., Characterisation of carboxymethyl cellulose-based superabsorbent polymer hydrogel for slow-release of N-P-K fertiliser, Journal of Chemical Technology and Metallurgy 2021, 56, 730-737, discloses carboxymethylcellulose graft-polymerized with acrylic acid to produce a superabsorbent polymer hydrogel. The polymer hydrogel is then loaded with fertilizer nutrients to provide a slow-release fertilizer composition. Kudzin et al., Stability of cellulose phosphates in alkalic solutions, Phosphorus, Sulfur, and Silicon and the Related Elements 2022, discloses suspensions of cellulose phosphates in solutions of potassium hydroxide. CA2883269C discloses composite fertilizers that include a cellulosic material, an amino compound, and optionally one or more nutrients. Belosinschi et al., Phosphorylation of cellulose in the presence of urea. Mechanism of reaction and reagent impact, Research Square 2021, discloses phosphorylation of cellulose in the presence of urea. CN103030129B discloses a method for producing a water-soluble ammonium potassium phosphate fertilizer. Rop et al. Formulation of slow release NPK fertilizer (cellulose-graft-poly(acrylamide)/nano-hydroxyapatite/soluble fertilizer) composite and evaluating its N mineralization potential, Annals of Agricultural Sciences 2018 63, 163-172, discloses fertilizer compositions that include nano-hydroxyapatite, urea, (NH₄)₂HPO₄, and K₂SO₄ in a water hyacinth cellulose-graft-poly(acrylamide) polymer gel. These fertilizers include either a non-biodegradable component, or do not include both slow and extended-release components. There is a need in the agri-nutrient industry for dual-release fertilizer compositions that include primary N, P, and K nutrients, and can serve as scaffolds for additional nutrients.

### SUMMARY OF THE INVENTION

A composite fertilizer composition is disclosed herein that employs a renewable and biodegradable polymeric component and a salt component that is encapsulated within the polymeric component. Both the polymeric component and the salt component include primary fertilizer nutrients. Upon exposure to moisture, at least part of the salt component can dissolve rapidly, thereby providing an immediate release of fertilizer nutrients. The polymeric component, by contrast, is less soluble and resists immediate solubilization. This allows the polymeric component to release its fertilizer nutrients and/or fertilizer nutrients encapsulated by the polymeric component over time. The resulting bi-phasic nutrient release profile provides both immediate and sustained nutrient release that is ideal for crop fertilization.

In one aspect, a method to produce a dual-release, cellulosic fertilizer composition comprising nitrogen, phosphorous, and potassium is disclosed. The method may include the steps of i) reacting a cellulosic material with phosphoric acid to produce a phosphorylated cellulosic material, wherein at least a portion of the cellulosic material hydroxyl groups are phosphorylated, ii) reacting the phosphorylated cellulosic material with a source of ammonia to produce ammonium cellulose phosphate, iii) reacting a potassium compound with phosphoric acid to form a potassium phosphate compound, iv) reacting the potassium phosphate compound with a source of ammonia to produce potassium ammonium phosphate, and v) combining the ammonium cellulose phosphate and the potassium ammonium phosphate to form a cellulosic fertilizer composition, wherein the cellulosic fertilizer composition comprises potassium ammonium phosphate encapsulated within ammonium cellulose phosphate. In some aspects, the method includes the step of vi) drying the cellulosic fertilizer composition. In some aspects, steps i), ii), iii), and iv) are performed in a single vessel. In some aspects, steps i), ii), iii), iv), and v) are performed in a single vessel. In some aspects, steps i) and ii) are performed in a first vessel and steps iii) and iv) are performed in a second vessel. In some aspects, a stoichiometric excess of phosphoric acid is used in step i) and at least a portion of the phosphoric acid reacted in step iii) comprises the stoichiometric excess of phosphoric acid used in step i). In some aspects, a stoichiometric excess of a source of ammonia is used in step ii) and at least a portion of the source of ammonia reacted in step iv) comprises the stoichiometric excess of a source of ammonia used in step ii).

In some aspects, reacting the cellulosic material with phosphoric acid comprises combining a solution of cellulosic material with a phosphoric acid solution. In other aspects, reacting the cellulosic material with phosphoric acid comprises adding the cellulosic material (neat, i.e., with no additional solvent) to a phosphoric acid solution. In some aspects, the cellulosic material is reacted with the phosphoric acid at a weight ratio of 1:1 to 1:5. The weight ratio of cellulosic material to phosphoric acid may be any one of, less than, greater than, or between 1:1, 1:2, 1:3, 1:4, 1:5, or any range derivable therein. In some aspects, reacting the cellulosic material with phosphoric acid comprises reacting at a temperature from about 100 °C to about 200 °C, preferably from about 125 °C to about 175 °C, more preferably at a temperature of about 150 °C. Reacting the cellulosic material with the phosphoric acid may be performed at a temperature of any one of, less than, greater than, between, or any range thereof of 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, 199, and 200 °C. In some aspects, reacting the cellulosic material with phosphoric acid produces phosphorylated cellulosic material in the form of a gel.

In some aspects, the source of ammonia comprises a solution of ammonium hydroxide, ammonium, ammonium carbonate, ammonia gas, succinimide, and/or phthalimide. In some aspects, reacting the phosphorylated cellulosic material with the source of ammonia comprises reacting at a temperature ranging from about 70 °C to about 170 °C, preferably from about 100 °C to about 140 °C, more preferably at a temperature of about 120 °C. Reacting the phosphorylated cellulosic material with the source of ammonia may be performed at a temperature of any one of, less than, greater than, between, or any range thereof of 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, 165, 166, 167, 168, 169, and 170 °C. In some aspects, reacting the phosphorylated cellulosic material with a source of ammonia produces ammonium cellulose phosphate in the form of a gel.

In some aspects, the cellulosic fertilizer composition further comprises ammonium phosphate absorbed onto the surface of the cellulosic fertilizer composition. In further aspects, the cellulosic fertilizer composition further comprises potassium ammonium phosphate absorbed onto the surface of the cellulosic fertilizer composition. In some aspects, the cellulosic fertilizer composition further comprises potassium phosphate absorbed onto the surface of the cellulosic fertilizer composition. In some aspects, the cellulosic fertilizer composition is in the form of a powder, prill, granule, and/or pellet. In some aspects, the cellulosic material is free of lignin.

In some aspects, the cellulosic material comprises cellulose, ethylcellulose, methylcellulose, hydroxypropyl cellulose, hydroxyethyl cellulose, and/or carboxymethyl cellulose. In some aspects, the potassium compound comprises one or more of potassium hydroxide, potassium carbonate, potassium nitrate, potassium chloride, potassium phosphate, potassium sulfate, potassium bicarbonate, potassium oxide, potassium permanganate, potassium bromide, and/or potassium iodide. In some aspects, the cellulosic fertilizer composition further comprises an additional nutrient, wherein the additional nutrient is added before, during, or after formation of the ammonium cellulose phosphate. In some aspects, the cellulosic fertilizer composition is free of urea.

Some aspects of the present disclosure are directed to a dual-release, cellulosic fertilizer comprising potassium ammonium phosphate encapsulated within ammonium cellulose phosphate. In some aspects, the dual-release, cellulosic fertilizer further comprises ammonium phosphate on the surface of the cellulosic fertilizer composition. In some aspects, the dual-release, cellulosic fertilizer further comprises potassium phosphate on the surface of the cellulosic fertilizer composition. In some aspects, the dual-release, cellulosic fertilizer further comprises potassium ammonium phosphate on the surface of the cellulosic fertilizer composition. In some aspects, the fertilizer is in powder, prill, granule, or pellet form. In some aspects, the fertilizer further comprises at least one additional nutrient selected from the group consisting of magnesium, chloride, sulfate, superphosphates, rock phosphate, potash, sulfate of potash (SOP), muriate of potash (MOP), kieserite, carnallite, magnesite, dolomite, boric acid, boron, copper, iron, manganese, molybdenum, zinc, selenium, silicon, free calcium, elemental sulfur, neem oil, seaweed extract, bio-stimulants, char, ashes from incineration of animal waste or animal tissues, or any combination thereof. In some aspects, the fertilizer does not comprise urea.

One aspect of the disclosure is directed to a method for fertilizing agricultural crops comprising applying a dual-release, cellulosic fertilizer as disclosed herein to a soil, water, a plant, or any combination thereof.

Also disclosed are the following Aspects 1 to 31 of the present invention.

Aspect 1 is a method for preparing a dual-release, cellulosic fertilizer composition comprising nitrogen, phosphorous, and potassium, the method comprising the steps: i) reacting a cellulosic material with phosphoric acid to produce a phosphorylated cellulosic material, wherein at least a portion of the cellulosic material hydroxyl groups are phosphorylated; ii) reacting the phosphorylated cellulosic material with a source of ammonia to produce ammonium cellulose phosphate; iii) reacting a potassium compound with phosphoric acid to form a potassium phosphate compound; iv) reacting the potassium phosphate compound with a source of ammonia to produce potassium ammonium phosphate; and v) combining the ammonium cellulose phosphate and the potassium ammonium phosphate to form a cellulosic fertilizer composition, wherein the cellulosic fertilizer composition comprises potassium ammonium phosphate encapsulated within ammonium cellulose phosphate.

Aspect 2 is the method of aspect 1, further comprising: vi) drying the cellulosic fertilizer composition.

Aspect 3 is the method of any one of aspects 1 or 2, wherein reacting the cellulosic material with phosphoric acid comprises combining a solution of cellulose with a phosphoric acid solution.

Aspect 4 is the method of any one of aspects 1 to 3, wherein the cellulosic material is reacted with the phosphoric acid at a weight ratio of 1:1 to 1:5.

Aspect 5 is the method of any one of aspects 1 to 4, wherein reacting the cellulosic material with phosphoric acid comprises reacting at a temperature from about 100 °C to about 200 °C.

Aspect 6 is the method of any one of aspects 1 to 5, wherein reacting the cellulosic material with phosphoric acid produces phosphorylated cellulosic material in the form of a gel.

Aspect 7 is the method of any one of aspects 1 to 6, wherein the source of ammonia comprises a solution of ammonium hydroxide, ammonium, ammonium carbonate, ammonia gas, succinimide, and/or phthalimide.

Aspect 8 is the method of any one of aspects 1 to 7, wherein reacting the phosphorylated cellulosic material with the source of ammonia comprises reacting at a temperature ranging from about 70 °C to about 170 °C.

Aspect 9 is the method of any one of aspects 1 to 8, wherein reacting the phosphorylated cellulosic material with a source of ammonia produces ammonium cellulose phosphate in the form of a gel.

Aspect 10 is the method of any one of aspects 1 to 9, wherein the cellulosic fertilizer composition further comprises ammonium phosphate absorbed onto the surface of the cellulosic fertilizer composition.

Aspect 11 is the method of any one of aspects 1 to 10, wherein the cellulosic fertilizer composition further comprises potassium ammonium phosphate absorbed onto the surface of the cellulosic fertilizer composition.

Aspect 12 is the method of any one of aspects 1 to 11, wherein the cellulosic fertilizer composition further comprises potassium phosphate absorbed onto the surface of the cellulosic fertilizer composition.

Aspect 13 is the method of any one of aspects 1 to 12, wherein the cellulosic fertilizer composition is in the form of a powder, prill, granule, and/or pellet.

Aspect 14 is the method of any one of aspects 1 to 13, wherein the cellulosic material is free of lignin.

Aspect 15 is the method of any one of aspects 1 to 14, wherein the cellulosic material comprises cellulose, ethylcellulose, methylcellulose, hydroxypropyl cellulose, hydroxyethyl cellulose, and/or carboxymethyl cellulose.

Aspect 16 is the method of any one of aspects 1 to 15, wherein the potassium compound comprises one or more of potassium hydroxide, potassium carbonate, potassium nitrate, potassium chloride, potassium phosphate, potassium sulfate, potassium bicarbonate, potassium oxide, potassium permanganate, potassium bromide, and/or potassium iodide.

Aspect 17 is the method of any one of aspects 1 to 16, wherein the cellulosic fertilizer composition further comprises an additional nutrient, wherein the additional nutrient is added before, during, or after formation of the ammonium cellulose phosphate.

Aspect 18 is the method of any one of aspects 1 to 17, wherein the cellulosic fertilizer composition is free of urea.

Aspect 19 is the method of any one of aspects 1 to 18, wherein steps i), ii), iii), and iv) are performed in a single vessel.

Aspect 20 is the method of any one of aspects 1 to 19, wherein steps i), ii), iii), iv), and v) are performed in a single vessel.

Aspect 21 is the method of any one of aspects 1 to 18, wherein steps i) and ii) are performed in a first vessel and steps iii) and iv) are performed in a second vessel.

Aspect 22 is the method of any one of aspects 1 to 21, wherein a stoichiometric excess of phosphoric acid is used in step i) and at least a portion of the phosphoric acid reacted in step iii) comprises the stoichiometric excess of phosphoric acid used in step i).

Aspect 23 is the method of any one of aspects 1 to 22, wherein a stoichiometric excess of a source of ammonia is used in step ii) and at least a portion of the source of ammonia reacted in step iv) comprises the stoichiometric excess of a source of ammonia used in step ii).

Aspect 24 is a dual-release, cellulosic fertilizer comprising potassium ammonium phosphate encapsulated within ammonium cellulose phosphate.

Aspect 25 is the dual-release, cellulosic fertilizer of aspect 24, further comprising ammonium phosphate on the surface of the cellulosic fertilizer composition.

Aspect 26 is the dual-release, cellulosic fertilizer of any one of aspects 24 or 25, further comprising potassium phosphate on the surface of the cellulosic fertilizer composition.

Aspect 27 is the dual-release, cellulosic fertilizer of any one of aspects 24 to 26, further comprising potassium ammonium phosphate on the surface of the cellulosic fertilizer composition.

Aspect 28 is the dual-release, cellulosic fertilizer of any one of aspects 24 to 27, wherein the fertilizer is in powder, prill, granule, or pellet form.

Aspect 29 is the dual-release, cellulosic fertilizer of any one of aspects 24 to 28, wherein the fertilizer further comprises at least one additional nutrient comprising magnesium, chloride, sulfate, superphosphates, rock phosphate, potash, sulfate of potash (SOP), muriate of potash (MOP), kieserite, carnallite, magnesite, dolomite, boric acid, boron, copper, iron, manganese, molybdenum, zinc, selenium, silicon, free calcium, elemental sulfur, neem oil, seaweed extract, bio-stimulants, char, ashes from incineration of animal waste or animal tissues, or any combination thereof.

Aspect 30 is the dual-release, cellulosic fertilizer of any one of aspects 24 to 29, wherein the fertilizer does not comprise urea.

Aspect 31 is a method for fertilizing agricultural crops comprising applying the dual-release, cellulosic fertilizer of any one of aspects 24 to 30 to a soil, water, a plant, or any combination thereof.

The following includes definitions of various terms and phrases used throughout this specification.

The term "fertilizer" is defined as a material applied to soils or to plant tissues to supply one or more plant nutrients essential or beneficial to the growth of plants and/or stimulants or enhancers to increase or enhance plant growth. Non-limiting examples of fertilizers include materials having one or more of urea, ammonium nitrate, calcium ammonium nitrate, urea calcium sulfate adduct, one or more superphosphates, binary NP fertilizers, binary NK fertilizers, binary PK fertilizers, NPK fertilizers, molybdenum, zinc, copper, boron, cobalt, and/or iron. In some aspects, fertilizers include agents that enhance plant growth and/or enhance the ability for a plant to receive the benefit of a fertilizer, such as, but not limited to biostimulants, urease inhibitors, and nitrification inhibitors.

The term "nutrient" is defined as a chemical element or substance used for the normal growth and development of a plant. Non-limiting examples of nutrients include N, P, K, Ca, Mg, S, B, Cu, Fe, Mn, Mo, Zn, Se, and Si or compounds thereof.

The term "granule" can include a solid material. A granule can have a variety of different shapes, non-limiting examples of which include a spherical, a puck, an oval, a rod, an oblong, or a random shape. The term "prill" refers to a solid globule of a substance formed by the congealing of a liquid. The term "pellet" refers to a rounded, compressed mass of fertilizer. The term "powder" refers to dry particles produced by the grinding, crushing, or disintegration of a fertilizer composition.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%," "vol.%," or "mol.%" refers to a weight percentage of a component, a volume percentage of a component, or molar percentage of a component, respectively, based on the total weight, the total volume of material, or total moles, that includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification, includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include"), or "containing" (and any form of containing, such as "contains" and "contain") are inclusive or open-ended and do not exclude additional, unrecited elements or method steps.

The dual-release, cellulosic fertilizer composition and methods of producing the dual-release, cellulosic fertilizer composition of the present invention can "comprise," "consist essentially of," or "consist of' particular ingredients, components, compositions, steps, etc. disclosed throughout the specification. With respect to the transitional phase "consisting essentially of," in one non-limiting aspect, a basic and novel characteristic of dual-release, cellulosic fertilizer composition of the present invention is the presence of potassium ammonium phosphate encapsulated within and absorbed onto the surface of the ammonium cellulose phosphate of the dual-release, cellulosic fertilizer composition.

### DETAILED DESCRIPTION OF THE INVENTION

A method for producing a dual-release, fertilizer composition comprising a combination of ammonium cellulose phosphate and potassium ammonium phosphate encapsulated within the ammonium cellulose phosphate is disclosed. The dual-release, fertilizer composition includes both an ammonium cellulose phosphate component and a potassium ammonium phosphate component that is encapsulated within and/or dispersed throughout the ammonium cellulose phosphate component. The potassium ammonium phosphate may be encapsulated within the ammonium cellulose phosphate and may also be provided on the surface of the ammonium cellulose phosphate. The encapsulated potassium ammonium phosphate component may readily dissolve in water and constitutes a quick-release component of the dual-release fertilizer. The ammonium cellulose phosphate component may have a plurality of ammonium phosphate groups, with the phosphate groups covalently bonded to the polymeric cellulose backbone. The covalent bond between cellulose and phosphate is relatively durable and may be broken over time and impart a delayed-release functionality for phosphate and nitrogen. Additional advantages of this fertilizer composition include the ability to provide non-urea based nitrogen, as urea may decrease the storage stability of a fertilizer, the ability to biodegrade, and the sustainable sourcing for components of the fertilizer.

A cellulosic fertilizer contains cellulose or cellulose derivatives such as ammonium cellulose phosphate. Cellulose is a linear polymeric organic compound with the formula (C₆H₁₀O₅)ₙ where n is generally several hundred to many thousands. D-glucose units are linked to each other through a β(1→4) glycosidic linkage that may be hydrolyzed in the presence of water to provide smaller cellulose chains and free glucose monosaccharides. Cellulose may also undergo biodegradation by microorganisms. Cellulase enzymes in microorganisms in the soil can break down cellulose into smaller cellulose chains and free glucose monosaccharides. Importantly, cellulose is primarily obtained from natural sources such as wood pulp and other plant sources, and constitutes a renewable scaffold for the fertilizer composition disclosed herein.

### A. Process to Produce Potassium Ammonium Phosphate/Ammonium Cellulose Phosphate Fertilizer

A process for producing a dual-release, fertilizer composition comprising potassium ammonium phosphate encapsulated within ammonium cellulose phosphate is disclosed. In some aspects, the process may be produced by the following reaction steps:
a)

   Cel-OH + PO₄H₃ → Cel-O-PO₃H₂ + H₂O

In step a) above, a cellulosic material (Cel-OH) is first provided. In some aspects, the cellulosic material is cellulose. In some aspects, the cellulosic material is ethylcellulose. In some aspects, the cellulosic material is methylcellulose. In some aspects, the cellulosic material is hydroxypropyl cellulose. In some aspects, the cellulosic material is hydroxyethyl cellulose. In some aspects, the cellulosic material is carboxymethyl cellulose. The "Cel-OH" nomenclature employed herein depicts the non-limiting example of a polymeric cellulose backbone "Cel-" made up of a plurality of glucose units and hydroxyl groups "-OH" of the glucose units. A single "-OH" group is used above for clarity, however, a typical cellulose molecule will include hundreds to thousands of hydroxyl groups. The cellulosic material may be combined with phosphoric acid, for example, dissolving cellulose in phosphoric acid. The phosphoric acid can be 85 wt. % H₃PO₄ in H₂O, as a non-limiting example. Upon heating a mixture of a cellulosic material and phosphoric acid, a dehydrative coupling reaction may occur between a cellulosic hydroxyl group and the phosphoric acid molecule to provide cellulosic phosphate, such as "Cel-O-PO₃H₂". On average, less than one, one, or more than one (e.g., two) cellulose hydroxyl group per glucose unit may react with a phosphoric acid molecule. Each internal glucose monomer within a cellulose polymeric chain can have up to three phosphate groups, e.g., Cel-O-PO₃H₂, Cel-(O-PO₃H₂)₂, and Cel-(O-PO₃H₂)₃. Terminal glucose monomers at the ends of a cellulose polymeric chain can have up to four phosphate groups, e.g., Cel-O-PO₃H₂, Cel-(O-PO₃H₂)₂, Cel-(O-PO₃H₂)₃, and Cel-(O-PO₃H₂)₄. Glucose monomers having a single phosphate group are depicted herein, for simplicity. The mixture may be heated at a temperature ranging from about 100 °C to about 200 °C, preferably from about 125 °C to about 175 °C, more preferably at a temperature of about 150 °C. The reaction may be performed in a sealed vessel to prevent loss of water. One molecule of water "H₂O" is produced for every dehydrative coupling reaction between cellulose and phosphoric acid. In some aspects, the cellulose phosphate is in the form of a gel.
b)

Cel-O-PO₃H₂ + H₃PO₄ → Cel-O-PO₃H₂ (+ free H₃PO₄)

In addition to the dehydrative coupling between cellulose and phosphoric acid, some free phosphoric acid may remain unreacted and exist within the gelatinous cellulose phosphate (as depicted in steps b above).
c)

Cel-O-PO₃H₂ + 2 NH₃ → Cel-O-PO₃(NH₄)₂

alternative c) Cel-O-PO₃H₂ + 2 NH₄OH → Cel-O-PO₃(NH₄)₂ + 2 H₂O

After, during, or before formation of cellulose phosphate, a source of ammonia is added to the mixture. In some aspects, the source of ammonia is a solution of ammonium hydroxide. In some aspects, the source of ammonia is ammonia gas or liquid ammonia obtained by cooling of ammonia gas below its boiling point (-33 °C). In some aspects, the source of ammonia is a solution of ammonium hydroxide. In some aspects, the source of ammonia is ammonium carbonate. In some aspects, the source of ammonia is succinimide. In some aspects, the source of ammonia is phthalimide. The mixture of cellulose phosphate and source of ammonia may be heated at a temperature ranging from about 70 °C to about 170 °C, preferably from about 100 °C to about 140 °C, more preferably at a temperature of about 120 °C. As ammonia is more basic than phosphate, ammonia will abstract protons from cellulose phosphate "Cel-O-PO₃H₂" to provide ammonium cellulose phosphate "Cel-O-PO₃(NH₄)₂" as depicted in step c above. When ammonium hydroxide is employed as the source of ammonia (alternative step c above), hydroxide will abstract protons from cellulose phosphate to provide water and cellulose ammonium phosphate.
d)

   KOH + H₃PO₄ → KH₂PO₄ + H₂O
d2)

   2 KOH + H₃PO₄ → HK₂PO₄ + 2 H₂O
d3)

   3 KOH + H₃PO₄ → K₃PO₄ + 3 H₂O

A potassium compound is reacted with phosphoric acid to produce a potassium phosphate compound. In some aspects the source of potassium is potassium hydroxide. In some aspects the source of potassium is potassium carbonate. In some aspects the source of potassium is potassium nitrate. In some aspects the source of potassium is potassium chloride. In some aspects the source of potassium is potassium phosphate. In some aspects the source of potassium is potassium sulfate. In some aspects the source of potassium is potassium bicarbonate. In some aspects the source of potassium is potassium oxide. In some aspects the source of potassium is potassium permanganate. In some aspects the source of potassium is potassium bromide. In some aspects the source of potassium is potassium iodide. Steps d, d2, and d3 above depict non-limiting, exemplary reactions that use different relative amounts of potassium hydroxide and phosphoric acid, and produce different potassium phosphate compounds. A typical reaction between potassium hydroxide and phosphoric acid may produce a mixture of the three potassium phosphate compounds depicted above, and the relative concentrations of the potassium phosphate compounds will depend on the relative amounts of potassium hydroxide and phosphoric acid employed.
e)

   KH₂PO₄ + 2 NH₃ → K(NH₄)₂PO₄
e2)

   HK₂PO₄ + NH₃ → K₂(NH₄)PO₄
alternative e)

   KH₂PO₄ + 2 NH₄OH → K(NH₄)₂PO₄ + 2 H₂O
alternative e2)

   HK₂PO₄ + NH₄OH → K₂(NH₄)PO₄ + H₂O

After, during, or before formation of a potassium phosphate compound, a source of ammonia is added to the mixture. The source of ammonia can be remaining unreacted source of ammonia exemplified in step c) and alternative step c) above. The source of ammonia can be additional source of ammonia added after, during, or before formation of the potassium phosphate compound. The source of ammonia can be a different source of ammonia than that used in step c) and alternative step c) above. The reactions depicted in non-limiting examples step e above, reaction between potassium dihydrogen phosphate and an ammonia source can provide potassium bis-ammonium phosphate. In step e2, reaction between potassium hydrogen phosphate and ammonia may provide di-potassium ammonium phosphate. When ammonium hydroxide is employed as the source of ammonia (alternative steps e and e2 above), the same potassium ammonium phosphate compounds are produced, with water produced as a byproduct. In some aspects, the source of ammonia is a solution of ammonium hydroxide. In some aspects, the source of ammonia is ammonia gas or liquid ammonia obtained by cooling of ammonia gas below its boiling point (-33 °C). In some aspects, the source of ammonia is a solution of ammonium hydroxide. In some aspects, the source of ammonia is ammonium carbonate. In some aspects, the source of ammonia is succinimide. In some aspects, the source of ammonia is phthalimide.
f)

   Cel-O-PO₃(NH₄)₂ + K(NH₄)₂PO₄ → cellulosic fertilizer composition
f2)

   Cel-O-PO₃(NH₄)₂ + K₂(NH₄)PO₄ → cellulosic fertilizer composition

The ammonium cellulose phosphate from step c or alternative step c above can be combined with the potassium ammonium phosphate compounds from steps e and e2 or alternative steps e and e2 above. In some aspects, the ammonium cellulose phosphate and potassium ammonium phosphate are produced in the same reaction vessel and the resulting mixture comprises the cellulosic fertilizer composition. In other aspects, the ammonium cellulose phosphate and potassium ammonium phosphate are prepared separately and subsequently combined to provide the cellulosic fertilizer composition. The cellulosic fertilizer composition may then be dried.

The reactions depicted above provide a fertilizer that includes N, P, and K nutrients (in the form of ammonium, phosphate, and potassium) that may be chemically bonded to and encapsulated within the cellulosic carrier material. Physically absorbed potassium ammonium phosphate may be found on the surface of and in pore cavities of the cellulosic material. In some aspects, the reactions depicted above provide a mixture of potassium ammonium phosphate and ammonium cellulose phosphate in the form of a gel. Water may then be removed from this gelatinous mixture to provide ammonium cellulose phosphate in solid form, with potassium ammonium phosphate encapsulated within the solid ammonium cellulose phosphate. Different techniques can be employed before, during, or after drying to provide the solid cellulosic fertilizer composition in powder, prill, granule, or pellet form.

These and other non-limiting aspects of the present invention are discussed in further detail in the following sections.

### B. Solid Forms of fertilizer composition

The dried, solid fertilizer composition produced can, in some instances, contain low amounts of moisture. The free-moisture content of the dried, solid fertilizer composition may be less than 0.6 wt.%, less than 0.5 wt.% water or 0.25 wt.% to less than 0.6 wt.% water. In some instances, the free moisture content is, is less than, is more than, or is between 0.5, 0.4, 0.3, 0.2, 0.1, or 0 wt.%, or any range thereof.

The dried, solid fertilizer composition may be produced in powder, prill, granule, or pellet form. In certain non-limiting aspects, the powder may comprise particles having an average particle size that is, is less than, is more than, or is between 1, 2, 3, 4, 5, 6, 7, 8, 9, 10, 11, 12, 13, 14, 15, 20, 30, 40, 50, 60, 70, 80, 90, 100, 200, 300, 400, 500, 600, 700, 800, or 900 micrometers or any range thereof. In some embodiments, the particles may be elongated particles or may be substantially spherical particles or other shapes, or combinations of such shapes. Non-limiting examples of shapes include a sphere, a puck, an oval, a rod, an oblong, or a random shape.

The dried, solid fertilizer composition may in some instances contain a coating on the surface of the fertilizer composition. In some instances, the coating may include nutrients for a plant, inhibitors of urea hydrolysis and/or nitrification, agents to slow or increase the rate of degradation of the granule and/or fertilizers, agents to repel moisture and/or provide a hydrophobic layer, agents that decrease or increase the reactivity of the granule and/or fertilizers, agents that provide additional benefits to plants, agents that increase the stability and/or crush strength of the granule and/or fertilizers, pH buffering agents, drying agents, biostimulants, microorganisms, etc. or any combination thereof. The coating may be a commercially available coating, an oil, a fertilizer, a micronutrient, talc, a seaweed and/or seaweed extract, a bacteria, a wax, etc. In some instances, the coating may contain surfactants. In some instances, the coating contains a wax, surfactants, and/or an amine-based compound.

In some aspects, the fertilizer composition contains a coating on the cellulosic fertilizer composition, such as a core comprising potassium ammonium phosphate encapsulated within ammonium cellulose phosphate, and a shell coating provided around the core. In some aspects, the fertilizer composition contains within a matrix of the coating, e.g., homogenously distributed therein, the ammonium cellulose phosphate and potassium ammonium phosphate encapsulated within the ammonium cellulose phosphate, such as an extruded fertilizer granule.

In some aspects, the fertilizer composition contains the ammonium cellulose phosphate as a matrix containing potassium ammonium phosphate and optionally other ingredients such as additional nutrient(s), inhibitor(s), alkali material, acidic material, biostimulant(s), microorganism(s), etc. In some aspects, the fertilizer composition contains a core with a coating of the ammonium cellulose phosphate and potassium ammonium phosphate encapsulated within the coating. The core may contain nutrients for a plant, inhibitors of urea hydrolysis and/or nitrification, agents to slow or increase the rate of degradation of the granule, agents to repel moisture and/or provide a hydrophobic layer, agents that decrease or increase the reactivity of the granule, agents that provide additional benefits to plants, agents that increase the stability and/or crush strength of the granule, pH buffering agents, drying agents, microorganisms, etc. or any combination thereof.

### C. Blended or Compounded Fertilizer Compositions

The fertilizer composition disclosed herein may also be included in a blended or compounded fertilizer composition comprising other fertilizers, such as other fertilizer granules. Additional fertilizers may be chosen based on the particular needs of certain types of soil, climate, or other growing conditions to maximize the efficacy of the fertilizer composition in enhancing plant growth and crop yield. The other fertilizer granules may be granules of urea, single super phosphate (SSP), triple super phosphate (TSP), ammonium sulfate, monoammonium phosphate (MAP), diammonium phosphate (DAP), muriate of potash (MOP), and/or sulfate of potash (SOP), and the like.

In one aspect, the fertilizer composition may comprise one or more inhibitors. The inhibitor may be a urease inhibitor or a nitrification inhibitor, or a combination thereof. In one aspect, a urease inhibitor and a nitrification inhibitor are included. In one aspect, the inhibitor may be a urease inhibitor. Suitable urease inhibitors include, but are not limited to, N-(n-butyl) thiophosphoric triamide (NBTPT) and phenylphosphorodiamidate (PPDA). In one aspect, the fertilizer composition may comprise NBTPT or PPDA, or a combination thereof. In another aspect, the inhibitor may be a nitrification inhibitor. Suitable nitrification inhibitors include, but are not limited to, 3,4-dimethylpyrazole phosphate (DMPP), dicyandiamide (DCD), thiourea (TU), 2-chloro-6-(trichloromethyl)-pyridine (Nitrapyrin), 5-ethoxy-3-trichloromethyl-1,2,4-thiadiazol, which is sold under the tradename Terrazole^{®}, by OHP Inc., USA, 2-amino 4-chloro 6-methyl pyrimidine (AM), 2-mercaptobenzothiazole (MBT), or 2-sulfanilamidothiazole (ST), and any combination thereof. In one aspect, a nitrification inhibitor may comprise DMPP, DCD, TU, nitrapyrin, 5-ethoxy-3-trichloromethyl-1,2,4-thiadiazol, AM, MBT, or ST, or a combination thereof. In one aspect, the fertilizer composition may comprise NBTPT, DMPP, TU, DCD, PPDA, nitrapyrin, 5-ethoxy-3-trichloromethyl-1,2,4-thiadiazol , AM, MBT, or ST, or a combination thereof.

### D. Method of Using the Fertilizer Composition

The fertilizer composition of disclosed herein can be used in methods of increasing the amounts of nitrogen, phosphorus, and potassium in soil and of enhancing plant growth. Such methods may include applying to the soil an effective amount of a composition comprising the fertilizer composition disclosed herein. The method may include increasing the growth and yield of crops, trees, ornamentals, *etc.* such as, for example, palm, coconut, rice, wheat, corn, barley, oats, and soybeans. The method may include applying the fertilizer composition disclosed herein to at least one of a soil, an organism, a liquid carrier, a liquid solvent, *etc.*

Non-limiting examples of plants that may benefit from the fertilizer disclosed herein include vines, trees, shrubs, stalked plants, ferns, *etc.* The plants may include orchard crops, vines, ornamental plants, food crops, timber, and harvested plants. The plants may include Gymnosperms, Angiosperms, and/or Pteridophytes. The Gymnosperms may include plants from the Araucariaceae, Cupressaceae, Pinaceae, Podocarpaceae, Sciadopitaceae, Taxaceae, Cycadaceae, and Ginkgoaceae families. The Angiosperms may include plants from the Aceraceae, Agavaceae, Anacardiaceae, Annonaceae, Apocynaceae, Aquifoliaceae, Araliaceae, Arecaceae, Asphodelaceae, Asteraceae, Berberidaceae, Betulaceae, Bignoniaceae, Bombacaceae, Boraginaceae, Burseraceae, Buxaceae, Canellaceae, Cannabaceae, Capparidaceae, Caprifoliaceae, Caricaceae, Casuarinaceae, Celastraceae, Cercidiphyllaceae, Chrysobalanaceae, Clusiaceae, Combretaceae, Cornaceae, Cyrillaceae, Davidsoniaceae, Ebenaceae, Elaeagnaceae, Ericaceae, Euphorbiaceae, Fabaceae, Fagaceae, Grossulariaceae, Hamamelidaceae, Hippocastanaceae, Illiciaceae, Juglandaceae, Lauraceae, Lecythidaceae, Lythraceae, Magnoliaceae, Malpighiaceae, Malvaceae, Melastomataceae, Meliaceae, Moraceae, Moringaceae, Muntingiaceae, Myoporaceae, Myricaceae, Myrsinaceae, Myrtaceae, Nothofagaceae, Nyctaginaceae, Nyssaceae, Olacaceae, Oleaceae, Oxalidaceae, Pandanaceae, Papaveraceae, Phyllanthaceae, Pittosporaceae, Platanaceae, Poaceae, Polygonaceae, Proteaceae, Punicaceae, Rhamnaceae, Rhizophoraceae, Rosaceae, Rubiaceae, Rutaceae, Salicaceae, Sapindaceae, Sapotaceae, Simaroubaceae, Solanaceae, Staphyleaceae, Sterculiaceae, Strelitziaceae, Styracaceae, Surianaceae, Symplocaceae, Tamaricaceae, Theaceae, Theophrastaceae, Thymelaeaceae, Tiliaceae, Ulmaceae, Verbenaceae, and/or Vitaceae family.

The effectiveness of compositions comprising the fertilizer composition disclosed herein may be ascertained by measuring the amount of nitrogen, phosphorus, potassium, or nitrogen, phosphorus, and potassium in the soil at various times after applying the fertilizer composition to the soil. It is understood that different soils have different characteristics, which may affect the stability of the nitrogen in the soil. The effectiveness of a fertilizer composition may also be directly compared to other fertilizer compositions by doing a side-by-side comparison in the same soil under the same conditions.

In one aspect, the fertilizer composition disclosed herein may have a density that is greater than water. This may allow the granules and/or fertilizers to sink in water rather than float. This may be especially beneficial in instances where application is intended to a crop that is at least partially or fully submerged in water. A non-limiting example of such a crop is rice, as the ground in a rice paddy is typically submerged in water. Thus, application of fertilizer composition to such crops may be performed such that the granules and/or fertilizer are homogenously distributed on the ground that is submerged under water. By comparison, granules and/or fertilizers that have a density that is less than water would have a tendency to remain in or on the water surface, which could result in washing away and/or coalescence of the granules and/or fertilizers, either of which would not achieve homogenous distribution of the granules and/or fertilizers to the ground that is submerged under water.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### A. Example 1 - Producing Cellulosic Fertilizer From Cellulose

1. Phosphorylation of cellulose. In an exemplary reaction, 100 g of cellulose can be combined with 181.5 g of H₃PO₄ (85 wt. % in water) and the reaction mixture can be heated to 150 °C. This combination of cellulose and phosphoric acid amounts provides cellulose phosphate in which approximately two hydroxyl groups per glucose monomer are converted into phosphate groups. This reaction can consume approximately 60.5 g of the phosphoric acid and provided a mixture that is gelatinous. Approximately 121 g of unreacted phosphoric acid can remained in the gelatinous mixture.
2. Ammonization of cellulose phosphate. To the reaction mixture above can be added 55.4 g of ammonia and the resulting combination can be heated at 120 °C. This quantity of ammonia can be sufficient to react with the cellulose phosphate groups, as well as with the unreacted phosphoric acid. The result can be a gelatinous mixture of ammonium cellulose phosphate and ammonium phosphate.
3. Production of potassium ammonium phosphate. 86 g of H₃PO₄ (85 wt. % in water) can be combined with 41.7 g KOH and the reaction mixture can be stirred. 12.5 g of ammonia can then be added to the reaction mixture to provide potassium ammonium phosphate.
4. Combination of ammonium cellulose phosphate and potassium ammonium phosphate. The mixture of ammonium cellulose phosphate and ammonium phosphate from step 2 can be combined with the potassium ammonium phosphate from step 3. The resulting fertilizer composition combination can be stirred to provide a homogeneous mixture. The fertilizer composition mixture can then be dried to provide a fertilizer composition comprising ammonium cellulose phosphate and potassium ammonium phosphate encapsulated within and absorbed on the surface of the polymeric ammonium cellulose phosphate.

## Claims

1. A method for preparing a dual-release, cellulosic fertilizer composition comprising nitrogen, phosphorous, and potassium, the method comprising the steps:
i) reacting a cellulosic material with phosphoric acid, preferably at a weight ratio of 1:1 to 1:5, and preferably at a temperature from about 100 °C to about 200 °C, to produce a phosphorylated cellulosic material, wherein at least a portion of the cellulosic material hydroxyl groups are phosphorylated;
ii) reacting the phosphorylated cellulosic material with a source of ammonia, preferably at a temperature ranging from about 70 °C to about 170 °C, to produce ammonium cellulose phosphate;
iii) reacting a potassium compound with phosphoric acid to form a potassium phosphate compound;
iv) reacting the potassium phosphate compound with a source of ammonia to produce potassium ammonium phosphate;
v) combining the ammonium cellulose phosphate and the potassium ammonium phosphate to form a cellulosic fertilizer composition; and
vi) optionally, drying the cellulosic fertilizer composition,
wherein the cellulosic fertilizer composition comprises potassium ammonium phosphate encapsulated within ammonium cellulose phosphate.

2. The method of claim 2, wherein reacting the cellulosic material with phosphoric acid comprises combining a solution of cellulose with a phosphoric acid solution.

3. The method of any one of claims 1 to 2, wherein:
reacting the cellulosic material with phosphoric acid produces phosphorylated cellulosic material in the form of a gel; and/or
reacting the phosphorylated cellulosic material with a source of ammonia produces ammonium cellulose phosphate in the form of a gel.

4. The method of any one of claims 1 to 3, wherein:
the source of ammonia comprises a solution of ammonium hydroxide, ammonium, ammonium carbonate, ammonia gas, succinimide, and/or phthalimide;
the cellulosic material comprises cellulose, ethylcellulose, methylcellulose, hydroxypropyl cellulose, hydroxyethyl cellulose, and/or carboxymethyl cellulose; and/or
the potassium compound comprises one or more of potassium hydroxide, potassium carbonate, potassium nitrate, potassium chloride, potassium phosphate, potassium sulfate, potassium bicarbonate, potassium oxide, potassium permanganate, potassium bromide, and/or potassium iodide.

5. The method of any one of claims 1 to 4, wherein:
the cellulosic fertilizer composition further comprises ammonium phosphate absorbed onto the surface of the cellulosic fertilizer composition;
the cellulosic fertilizer composition further comprises potassium ammonium phosphate absorbed onto the surface of the cellulosic fertilizer composition; and/or
the cellulosic fertilizer composition further comprises potassium phosphate absorbed onto the surface of the cellulosic fertilizer composition.

6. The method of any one of claims 1 to 5, wherein:
the cellulosic fertilizer composition is in the form of a powder, prill, granule, and/or pellet;
the cellulosic material is free of lignin; and/or the cellulosic fertilizer composition is free of urea.

7. The method of any one of claims 1 to 6, wherein the cellulosic fertilizer composition further comprises an additional nutrient, wherein the additional nutrient is added before, during, or after formation of the ammonium cellulose phosphate.

8. The method of any one of claims 1 to 7, wherein:
steps i), ii), iii), and iv) are performed in a single vessel;
steps i), ii), iii), iv), and v) are performed in a single vessel; or
steps i) and ii) are performed in a first vessel and steps iii) and iv) are performed in a second vessel.

9. The method of any one of claims 1 to 8, wherein:
a stoichiometric excess of phosphoric acid is used in step i) and at least a portion of the phosphoric acid reacted in step iii) comprises the stoichiometric excess of phosphoric acid used in step i); and/or
a stoichiometric excess of a source of ammonia is used in step ii) and at least a portion of the source of ammonia reacted in step iv) comprises the stoichiometric excess of a source of ammonia used in step ii).

10. A dual-release, cellulosic fertilizer comprising potassium ammonium phosphate encapsulated within ammonium cellulose phosphate.

11. The dual-release, cellulosic fertilizer of claim 10, further comprising:
ammonium phosphate on the surface of the cellulosic fertilizer composition;
potassium phosphate on the surface of the cellulosic fertilizer composition; and/or
potassium ammonium phosphate on the surface of the cellulosic fertilizer composition.

12. The dual-release, cellulosic fertilizer of any one of claims 10 to 11, wherein the fertilizer is in powder, prill, granule, or pellet form.

13. The dual-release, cellulosic fertilizer of any one of claims 10 to 12, wherein the fertilizer further comprises at least one additional nutrient comprising magnesium, chloride, sulfate, superphosphates, rock phosphate, potash, sulfate of potash (SOP), muriate of potash (MOP), kieserite, carnallite, magnesite, dolomite, boric acid, boron, copper, iron, manganese, molybdenum, zinc, selenium, silicon, free calcium, elemental sulfur, neem oil, seaweed extract, bio-stimulants, char, ashes from incineration of animal waste or animal tissues, or any combination thereof.

14. The dual-release, cellulosic fertilizer of any one of claims 10 to 13, wherein the fertilizer does not comprise urea and/or lignin.

15. A method for fertilizing agricultural crops comprising applying the dual-release, cellulosic fertilizer of any one of claims 10 to 14 to a soil, water, a plant, or any combination thereof.
